# EUROPÄISCHE PATENTSCHRIFT

(11) **EP 2 723 803 B1**
(45) Veröffentlichungstag und Bekanntmachung des Hinweises auf die Patenterteilung: **26.11.2014**
(21) Anmeldenummer: 12769585.6
(22) Anmeldetag: 19.06.2012
(51) Int. Cl.: C08J 3/20, C08J 11/08, C08J 5/00, B21D 26/06, C08L 91/00

(54) **BLEND FÜR DIE POLYMER- UND KUNSTSTOFFTECHNIK SOWIE DESSEN VERWENDUNG**
BLEND FOR POLYMER AND PLASTICS ENGINEERING AND THE USE THEREOF
MÉLANGE POUR LA TECHNIQUE DES POLYMÈRES ET DES MATIÈRES PLASTIQUES ET UTILISATION DUDIT MÉLANGE

(30) Priorität: 22.06.2011 DE 102011105708
(43) Veröffentlichungstag der Anmeldung: 30.04.2014
(73) Patentinhaber: Beckmann, Jörg, 31139 Hildesheim (DE)
(72) Erfinder: Beckmann, Jörg, 31139 Hildesheim (DE)
(74) Vertreter: Lins, Martina
(86) Internationale Anmeldenummer: PCT/DE2012/000662
(87) Internationale Veröffentlichungsnummer: WO 2012/175073

(56) Entgegenhaltungen:
- DE-B3-102009 060 560

## Beschreibung

Die Erfindung betrifft ein Blend für die Polymer- und Kunststofftechnik sowie dessen Verwendung.

Unter einem Blend versteht man allgemein eine Mischung aus verschiedenen Stoffen, wobei es sich u. a. um verschiedene Öle handeln kann. Von einem Blend spricht man auch bei einer Mischung verschiedener Polymere.

Vor allem aus ökologischen Gründen, aber auch zur Schonung anderer Rohstoffreserven werden in der Kunststoffindustrie zunehmend nachwachsende Rohstoffe verwendet.

Aus der US 2006/0270747 A1 ist die Verwendung von Pflanzenöl als Polyol oder in Verbindung mit anderen Polyolen für die Herstellung von Polyurethanschäumen bekannt. Darin wird ein Polyolblend eingesetzt, dass ein Pflanzenöl-Polyol, vorzugsweise ein Rizinusöl enthält.

Aus der DE 199 36 481 ist außerdem der Einsatz von Fettalkoholen als Zellregler und die Verwendung von Rizinusölsulfaten als Homogenisator oder Emulgiermittel bekannt.

Generell ist in der Kunststoffchemie der Zusatz von Weichmacherölen bekannt, auch hier werden natürliche Öle häufig verwendet.

Nachwachsende Rohstoffe, speziell flüssige nachwachsende Rohstoffe, wie Öle und deren Derivate, werden also in der Kunststoffindustrie bereits vielfältig verwendet, u. a. auch in Blends und Compounds, wobei sich der Begriff "Compound" in der Regel ausschließlich auf feste Mischungen bezieht.

Es besteht daher ein Bedürfnis Vor- und Zwischenprodukte für die Kunststoffindustrie zur Verfügung zu stellen, die nachwachsende Rohstoffe enthalten, auf üblichen Spritzguss- oder Extrusionsanlagen einfach verarbeitbar sind und zu Kunststoffen mit neuen interessanten Gebrauchseigenschaften führen können.

Die Aufgabe der Erfindung besteht darin, ein vorzugsweise flüssiges oder pastöses Blend für die Polymer- und Kunststofftechnik zur Verfügung zu stellen, das die Einarbeitbarkeit von Flüssigkomponenten verbessert, die Verarbeitungsbedingungen im Reaktivspritzguss und bei reaktiver Extrusionsverarbeitung verbessert und gleichzeitig zu Kunststoffen mit guten Gebrauchseigenschaften führt.

Diese Aufgabe wird durch ein Blend gelöst, das
a) wenigstens einen Grundstoff der Gruppe: flüssige oder bis 150 °C verflüssigbare Verbindungen aus nachwachsenden Rohstoffen in Form von Ölen, Fettsäuren, Fettalkoholen, Ölsäuren, Fettsäureestern, Ölsäureestern und hydrierten Ölen, sowie
b) nanopartikuläre Teilchen, enthält, wie sie gemäß DE 10 2009 060 560 erhältlich sind, nämlich durch Zerkleinern elastomerer und thermoplastischer Feststoffe in Form von Stückgut, auch im Verbund mit anderen Materialien, wobei das Stückgut einer Extraktion mit überkritischem Kohlendioxid unterzogen wird und das so behandelte Stückgut anschließend einer Schockwellenbehandlung mit durch Hochspannung ausgelösten Schockwellen in fluidem dielektrischen Medium unterzogen wird und wobei das Medium Wasser, ein organische Flüssigkeit mit Festpunkt unter - 20 °C oder überkritisches Kohlendioxid ist) und
c) optional weitere Zusatz- und Hilfsstoffe, insbesondere in der Kunststofftechnik bekannte Additive, weitere Füllstoffe (neben den vorgenannten nanopartikulären Teilchen) und/oder Verstärkungsfasern.

Unter nanopartikulären Teilchen werden hier solche bis zu einer Teilchengröße von maximal 150 nm (größter Teilchendurchmesser) verstanden, vorzugsweise solche bis 100 nm Teilchendurchmesser. Die Größenbestimmung kann erfolgen, wie im Stand der Technik allgemein üblich, beispielsweise durch Lichtstreuverfahren. Der zahlenmäßig überwiegende Teil der Teilchen, vorzugsweise mehr als 50 %, sollten keinen die genannte Grenze überschreitenden Durchmesser besitzen. Als Beispiel für die flüssigen oder bei moderaten Temperaturen bis 150 °C verflüssigbaren nachwachsenden Rohstoffen sind in erster Linie die Öle zu nennen. Geeignet sind u. a. Rapsöl, Palmöl, Kokosöl, Sojaöl, Leinöl, Sonnenblumenöl, Rizinusöl, Holzöl aus verflüssigtem (pyrolysiertem) Holz, Traubenkernöl, Schwarzkümmelöl, Kürbiskernöl, Borretschsamenöl, Weizenkeimöl, Erdnussöl, Aprikosenkernöl, Pistazienkernöl, Mandelöl, Olivenöl, Macadamianussöl, Avocadoöl, Sanddornöl, Sesamöl, Hanföl, Haselnussöl, Nachtkerzenöl, Fischöl, Distelöl, Walnussöl sowie die entsprechenden hydrierten Öle, wobei als bevorzugt hydriertes Rizinusöl neben nativem Rizinusöl zu nennen ist.

Geeignet sind weiterhin mit Hydroxylgruppen, Carboxylgruppen, Estergruppen und/oder Aldehydgruppen modifizierte Öle, insbesondere die vorgenannten Öle in hydroxylierter, veresterter oder carboxylierter Form. Besonders geeignet sind unter den Säuren Myristinsäure, Myristoleinsäure, Palmitinsäure, Palmitoleinsäure, Ölsäure, Vaccensäure, Erucasäure, Nervonsäure, Linolsäure, Linolensäure, Stearidonsäure, Acchaidonsäure, Timnodonsäure, Cervonsäure u. a. mehr, insbesondere aus den vorgenannten Öle gewonnene Säuren, bevorzugt aus Rizinusöl gewonnene Sebacinsäure.

Ein geeigneter nachwachsender Rohstoff ist Kautschuklöwenzahn und der daraus gewonnen Roh-Kautschuk.

Die nativen oder hydrierten Öle, Säuren (Carbonsäuren), Ester (Carbonsäureester), Fettalkohole und Polyole der genannten Gruppe nachwachsender Rohstoffe können einzeln oder im Gemisch verwendet werden.

Ein Additivieren mit in der Kunststofftechnik üblichen Zusatz- und Hilfsstoffen ist im Rahmen der Erfindung möglich. Bezüglich geeigneter Additive wird auf die einschlägigen Kunststoffhandbücher verwiesen, beispielsweise Becker/Braun "Kunststoffhandbuch", insbesondere "technische Thermoplaste", Hanser Verlag, München, verwiesen.

Das erfindungsgemäße Blend steht bei Temperaturen zwischen 10 und 150 °C in flüssiger oder pastöser Form zur Verfügung. Die Viskosität bzw. das plastische Verhalten der weichen Masse ist selbstverständlich stark vom Gehalt der Nanoteilchen und gegebenenfalls anderer fester Füllstoffe abhängig.

Das erfindungsgemäße Blend besitzt besondere Verarbeitungseigenschaften durch seinen Gehalt nanopartikulärer Teilchen aus Schockwellen-zerkleinerten Elastomeren und thermoplastischen Feststoffen. Es ist bekannt, dass in Mischungen mit nanopartikulären Teilchen aufgrund des hohen Einflusses der Grenzflächen zwischen den Teilchen und dem restlichen Blend besondere physikalische Eigenschaften vorhanden sind, die auch auf die Chemie bei der Weiterverarbeitung des Blends einen Einfluss haben können.

Gemäß einem ersten Aspekt der Erfindung kann das Blend innerhalb eines Extrusionsprozesses verwendet werden. Dabei wird die flüssige Phase, im Folgenden als "Ölphase" bezeichnet, ihrer Zusammensetzung entsprechend als Kunststoffkomponente verwendet, wie in der Kunststofftechnik üblich, z. B. als Polyol, wie in den vorstehend zitierten Druckschriften. Durch die gleichzeitige Anwesenheit der nanopartikulären Teilchen findet jedoch eine besondere Plastifizierung während des Extrusionsprozesses statt, der entscheidenden Einfluss auf die Produkteigenschaften nimmt.

Die speziell hier gewählten Nanoteilchen aus dem Schockwellenrecyclingverfahren verleihen dem Endprodukt eine gute Schlagzähigkeit.

Gemäß einem weiteren Aspekt der Erfindung kann das erfindungsgemäße Blend in verschiedenen Spritzgussverfahren eingesetzt werden. Dieser Aspekt ist insbesondere dann bevorzugt, wenn der Feststoffanteil in dem Blend unter 50 % ist, vorzugsweise unter 30 %, weiter vorzugsweise unter 10 Gew.-%. Auch hier wird die "Ölkomponente" so eingesetzt, wie für den betreffenden Spritzgussprozess aufgrund der Chemie der Grundkomponenten vorgesehen. Der in diesem Falle relativ geringere Anteil an nanopartikulären Teilchen trägt zur Veränderung der mechanischen Eigenschaften des Endprodukts Kunststoff bei.

Sofern die nachwachsenden Rohstoffe, die in dem Blend eingesetzt sind, einen hohen Säuregehalt besitzen, kann das Blend beispielsweise innerhalb der Polyesterherstellung oder der Polyamidherstellung eingesetzt werden.

Besitzen die nachwachsenden Rohstoffe einen hohen Hydroxylgruppengehalt, so können sie beispielsweise in der Polyesterherstellung oder der Polyurethanherstellung verwendet werden.

Für den Einsatz innerhalb reaktiver Systeme können die Additive vorzugsweise zusätzlich Vernetzungsmittel, Katalysatoren, Kettenverlängerungsmittel, Polymerisationsverzögerer, Polymerisationsbeschleuniger usw. enthalten.

Besonders bevorzugte Additive sind weiterhin Alterungsschutzmittel, UV-Schutzmittel, oberflächenaktive Substanzen, wie u. a. Emulgiermittel, Dispersionsmittel usw., Flammschutzmittel und auch Farbstoffe.

In Weiterbildung der Erfindung ist das Blend auch für die Compoundierung von Thermoplasten vorgesehen. Das Blend besitzt hierfür vorzugsweise einen Gehalt an nanopartikulären Teilchen aus der Schockwellenzertrümmerung von zwischen 5 und 80 Gew.-%. Die "Ölphase" kann zur Weichmachung dienen. Die Nanoteilchen verbessern die Schlagzähigkeit der Thermoplasten, wobei die Verbesserung der Eigenschaften im Einzelnen von der Art des Thermoplasten abhängt.

Besonders bevorzugt ist es, wenn das Blend als Polymerisations- oder Polykondensationsreagenz eingesetzt wird, wie oben bereits beschrieben. In Weiterbildung der Erfindung ist auch vorgesehen, dass das Blend in einem seiner Verwendung vorgeschalteten Schritt einer chemischen Umsetzung bzw. Modifikation des Grundstoffs innerhalb des Blends unterzogen worden sein kann. Viele Modifikationsreaktionen, beispielsweise die Veresterung von Hydroxylgruppen, bestimmte Verseifungen oder die Einfügung von Amingruppen, die Amidierung in den Rohstoffen vorhandener Säuren und viele Modifikationsreaktionen mehr, können ohne weiteres in Anwesenheit der nanopartikulären Teilchen aus der Schockwellenzertrümmerung durchgeführt werden. Auf diese Weise können Standardblends vorgehalten werden, die dennoch vor oder während ihrer Weiterverarbeitung noch für den Anwendungszweck angepasst werden können.

Die Verwendung des Blends erfolgt besonders bevorzugt in verschiedenen, auch reaktiven, Extrusionsverfahren und Spritzgussverfahren.

Weiterhin ist die Verwendung der Blends im Reaktionsspritzguss (auch Reaktivspritzguss) besonders vorteilhaft (Reaction Injection Moulding = RIM).

Die neuen Blends gemäß dieser Erfindung sind demnach nützlich für die Herstellung von Polyestern, Epoxiden, Kunstharzen, Polyurethanharzen, verschiedenster Duroplasten, Kautschukelastomeren, thermoplastischen Elastomeren, Phenolformaldehydharzen und auch Polyamiden.

Nachfolgend wird das spezielle Verfahren nach DE 10 2009 060 560 B3 erläutert, mit dem die Nanoteilchen, die bei dieser Erfindung eingesetzt werden, besondere Eigenschaften besitzen und die besonderen Vorteile des erfindungsgemäßen Blends mit sich bringen, erhältlich sind:

### Zerkleinerungsverfahren

Das grundlegende Verfahren zur Herstellung der nanopartikulären Teilchen durch Schockwellenzertrümmerung aus Elastomeren und/oder Thermoplasten, auch innerhalb von Verbundstoffen, ist in der DE 10 2009 060 560 B3 beschrieben, deren Inhalt durch Bezugnahme zu einem Bestandteil dieser Anmeldung gemacht wird.

Das dortige Verfahren kann diskontinuierlich, d.h. im Batch-Betrieb, kontinuierlich oder halbkontinuierlich durchgeführt werden.

Bei diskontinuierlichem Betrieb wird zunächst eine Extraktion einer bestimmten Menge des Ausgangsmaterials in einem Extraktor mit flüssigem Kohlendioxid unter Druck, d.h. mit überkritischem Kohlendioxid, durchgeführt und das Material wird anschließend in einen Reaktor für die Schockwellenbehandlung überführt. Nach der Schockwellenbehandlung wird das Verfahrensprodukt, nämlich das zerkleinerte Feststoffmehl, entnommen und von der Prozessflüssigkeit getrennt oder in dieser weiterbehandelt, gelagert oder für die Verwendung oder Weiterverwertung transportiert.

Bei kontinuierlicher Verfahrensführung wird Ausgangsmaterial kontinuierlich einem hierfür ausgelegten Extraktor, beispielsweise einem Gegenstromextraktor, zugeführt, kontinuierlich abgenommen und durch den Reaktionsraum einer Schockwellenanlage geführt, wie beispielsweise in der US 5 758 831 dargestellt. Beide Verfahrensweisen können verbunden werden, zum Beispiel, indem größere Chargen einheitlicher Ausgangsmaterialien in einer für kontinuierlichen Betrieb ausgelegten Anlage nacheinander und getrennt behandelt werden.

Vorrichtungen für die Behandlung von Materialien mit elektrisch gezündeten Schockwellen oder, anders ausgedrückt, Verfahren für die elektrohydraulische Zertrümmerung sind unter anderem aber nicht allein aus den genannten Schriften DE 195 34 232 C2 und US 5 758 831 bekannt. Derartige Vorrichtungen können für das Zerkleinerungsverfahren verwendet werden.

Die Extraktion von Stoffen mit überkritischem Kohlendioxid ist als solches Stand der Technik. Hierfür bekannte Vorrichtungen können vom Fachmann eingesetzt werden und brauchen daher hier nicht näher erläutert zu werden.

Durch die Extraktion mit überkritischem Kohlendioxid (CO₂) wird das zu behandelnde und zu zerkleinernde Material für das nachfolgende Schockwellenverfahren konditioniert und gereinigt. In dem Material vorhandene, chemisch nicht fest eingebundene Additive werden herausgelöst, d.h. extrahiert. Hierzu zählen zahlreiche Weichmacher, Lichtschutzmittel, Stabilisatoren, Farbstoffe, Gleitmittel, Trennmittel und viele andere mehr. Häufig sind die Feststoffbauteile durch ihren Gebrauch mit Fremdstoffen belastet, die dem Grundmaterial für eine Wiederverwendung ohnedies entzogen werden müssten. Diese Stoffe werden, da nicht fest eingebunden, in der Extraktionsstufe von vorneherein mit entfernt.

Wegen der zuvor durchgeführten Extraktion kann die nachfolgende Schockwellenbehandlung energieeffizienter durchgeführt werden. Die tiefen Versprödungstemperaturen sind nicht mehr zwingend erforderlich, es kann bei weniger tiefen Temperaturen bis hin zu Raumtemperatur gearbeitet werden. Die zu wählende Temperatur hängt von der Behandlungsaufgabe und dem eingesetzten fluiden Medium (dem Dielektrikum und Stoßwellenübertragungsmedium bzw. der Prozessflüssigkeit) ab.

Als fluides dielektrisches Medium wird Wasser, eine organische Flüssigkeit oder überkritisches Kohlendioxid verwendet. Die organische Flüssigkeit kann bevorzugt ein Kohlenwasserstoff, ein Keton, wie beispielsweise Aceton oder ein Alkohol sein, vorzugsweise Methanol, Ethanol, Propanol, Isopropanol oder höhere Alkohole. Der Alkohol kann auch ein Polyol sein, insbesondere ein Glykol, wie Ethylenglykol oder Propylenglykol, allgemein ein Diol oder ein Triol, bei letzterem vorzugsweise Glycerin. Ferner kommen Kohlenwasserstoffe, beispielsweise Hexan, Heptan, Cyclohexan, Xylol, Benzol, Toluol, etherische Lösungsmittel, wie zum Beispiel Dioxan, Diisopropylether, Tetrahydrofuran, oder chlorierte Kohlenwasserstoffe, wie insbesondere Chloroform, Dichlormethan, Tetrachlorkohlenwasserstoff oder Dichlorethylen in Frage. Das dielektrische Medium kann ein Flüssigkeitsgemisch sein.

Eine Extraktion mit anderen Mitteln als CO₂, vorzugsweise organischen Extraktionsmitteln vor der Schockwellenbehandlung könnte nahe liegen, da dann Extraktionsmittel und dielektrisches Medium gleich gewählt werden könnten, was verschiedene Vorteile mit sich brächte. Tatsächlich wäre die Verwendung eines solchen Extraktionsmittels jedoch nachteilig, da es das Polymer bzw. Elastomer vor der Schockwellenbehandlung weich machen würde. Es müssten dann noch tiefere Temperaturen eingesetzt werden.

Gerade die Kombination aus einer vorgeschalteten Extraktion mit überkritischem CO₂ und einer Schockwellenbehandlung in CO₂, Wasser oder organischer Flüssigkeit ergibt die Vorteile des für die vorliegende Erfindung genutzten Zertrümmerungsverfahrens nach DE 10 2009 060 560 B3.

Vorzugsweise wird die Schockwellenbehandlung innerhalb des Zertrümmerungsverfahrens bei einer Temperatur zwischen - 80 °C und + 50 °C durchgeführt. Gemäß einem möglichen Ausführungsbeispiel wird sowohl die Extraktion wie auch die Schockwellenbehandlung mit überkritischem Kohlendioxid durchgeführt. Dies ermöglicht es, die Ströme von Extraktionsmittel und fluidem Schockwellenmedium zu verbinden. Die Verwendung (und teilweise Entsorgung) organischer Flüssigkeiten wird vermieden.

Besonders bevorzugt ist es auch, wenn das Extraktionsmedium und/oder das dielektrische Medium gereinigt und zurückgeführt werden. Die Reinigungsvorgänge können prozesstechnisch verbunden werden.

Weiterhin kann vorgesehen sein, dass die Extraktion und die Schockwellenbehandlung unmittelbar aufeinander folgen. Zwischenschritte sind nicht erforderlich. Für den Fall, dass beides mit überkritischem Kohlendioxid durchgeführt wird, können die Prozessparameter (Druck, Temperatur) für das Extraktionsmittel und das Schockwellenmedium identisch eingestellt werden, so dass die Überführung der zu behandelnden Stoffe und die Verbindung der Prozesskreisläufe zwischen Extraktion und Schockwellenbehandlung vereinfacht wird.

Zwischen Extraktion und Schockwellenbehandlung kann eine spontane Entspannung des Kohlendioxids erfolgen.

Vorzugsweise wird das Produkt der Schockwellenbehandlung einer Nachbehandlung unterzogen. Die Nachbehandlung kann beispielsweise eine Oberflächenkonditionierung, z.B. eine Plasmabehandlung, sein. Die Nachbehandlung kann auch in einer Sichtung oder Klassifizierung der Teilchen bestehen. Es kann sich um eine physikalische oder um eine chemische Nachbehandlung handeln.

Die Nachbehandlung richtet sich nach der geplanten Weiterverwertung des Feststoffmehls im Rahmen der vorliegenden Erfindung. Eine Nachbehandlung mit einer chemischen Funktionalisierung der Feststoffmehl-Polymere ist besonders bevorzugt. Gemäß einem besonders bevorzugten Aspekt wird eine Oberflächenfunktionalisierung der Partikel vorgesehen, wie sie dem Fachmann grundsätzlich bekannt ist. In besonders bevorzugten Ausführungsformen erfolgt die Funktionalisierung mit OH-Gruppen (Hydroxylgruppen), Amingruppen, Amidgruppen, Halogengruppen, Sauerstoffsäuregruppen, insbesondere -COOH oder Säurehalogenidgruppen. Gemischte Funktionalisierungen mit chemisch verschiedenen Gruppen können ebenfalls durchgeführt werden.

Im Folgenden werden zwei Beispiele für die Verwendung der erfindungsgemäßen Blends angegeben. Die Zusammensetzungen eignen sich insbesondere für elastische Beschichtungen.

### Beispiel 1

### Angaben in Gewichtsteilen

100 Teile eines Blends aus Rizinusöl (80 Gew.-%) und nanopartikulären Teilchen aus der Schockwellenzertrümmerung (20 Gew.-%)
65 Teile MDI-Diisocyanat
5 Teile Polyglycol
0,5 Teile Dibutylcindilaurat
1 Teil Wasser

### Beispiel 2

### Angaben in Gewichsteilen

65 Teile Blend aus Riziniusöl (80 Gew.-%) und nanopartikulären Teilchen aus der Schockwellenzertrümmerung (20 Gew.-%)
75 Teile MDI-Diisocyanat
10 Teile Polyglycol
0,5 Teile Dibutylcindilaurat
1 Teil Wasser
0,5 Teile Dabco-Aminbeschleuniger.

## Patentansprüche

1. Blend für die Polymer- und Kunststofftechnik, enthaltend
a) wenigstens einen Grundstoff ausgewählt aus der Gruppe bestehend aus flüssigen oder bis 150 °C verflüssigbaren Verbindungen aus nachwachsenden Rohstoffen in Form von Ölen, Fettsäuren, Fettalkoholen, Ölsäuren, Fettsäureestern, Estern der Ölsäuren und hydrierten Ölen,
b) nanopartikuläre Teilchen, die erhältlich sind durch Zerkleinern elastomerer und thermoplastischer Feststoffe in Form von Stückgut, auch im Verbund mit anderen Materialien, bei welchem das Stückgut einer Extraktion mit überkritischem Kohlendioxid unterzogen wird und das so behandelte Stückgut anschließend einer Schockwellenbehandlung mit durch Hochspannung ausgelösten Schockwellen in fluidem dielektrischen Medium unterzogen wird, wobei das Medium Wasser, eine organische Flüssigkeit mit Fp. unter -20 °C oder überkritisches Kohlendioxid ist und
c) optional weitere Zusatz- und Hilfsstoffe, insbesondere Additive, weitere Füllstoffe und/oder Verstärkungsfasern.

2. Verwendung des Blends nach Anspruch 1 für die Compoundierung von Thermoplasten.

3. Verwendung des Blends nach Anspruch 1 als Polymerisations- oder Polykondensationsreagenz, wobei in einem der Verwendung vorgeschalteten Schritt optional eine chemische Umsetzung des Grundstoffs innerhalb des Blends vorgenommen worden sein kann.

4. Verwendung nach Anspruch 2 oder 3 innerhalb eines Extrusions-oder Spritzgussverfahrens.

5. Verwendung nach Anspruch 3 oder 4 in einem Reaktionsspritzgussverfahren (Reaction Injection Moulding, RIM).

## Claims

1. Blend for polymer and plastics technology, comprising
a) at least one parent material selected from the group of compounds which are liquid or which can be liquefied at up to 150°C, from renewable raw materials in the form of hydrogenated and other oils, fatty acids, fatty alcohols, oleic acids, fatty acid esters and esters of oleic acids,
b) nanoparticles obtainable via comminution of elastomeric and thermoplastic solids in the form of larger units of material, which may be in a composite with other materials, where the larger units of material are subjected to extraction with supercritical carbon dioxide and the larger units of material thus treated are then subjected to a shockwave treatment using high-voltage-triggered shockwaves in a fluid dielectric medium, where the medium is water, an organic liquid with freezing point below -20°C or supercritical carbon dioxide, and
c) optionally other additional and auxiliary substances, in particular additives, other fillers and/or reinforcing fibres.

2. Use of' the blend according to Claim 1 for the compounding of thermoplastics.

3. Use of the blend according to Claim 1 as polymerization or polycondensation reagent, where, in a step preceding the use, a chemical reaction of the parent material can optionally have been undertaken within the blend.

4. Use according to Claim 2 or 3 within an extrusion or injection-moulding process.

5. Use according to Claim 3 or 4 in a reaction-injection-moulding process (RIM).

## Revendications

1. Mélange pour la technique des polymères et des matières plastiques, contenant
a) au moins une matière de base choisie parmi le groupe comprenant des composés liquides ou capables d'être liquéfiés jusqu'à 150° C à partir de matières brutes renouvelables sous la forme d'huiles, d'acides gras, d'alcools gras, d'acides oléiques, d'esters d'acides gras, d'esters d'acides oléiques et d'huiles hydratées,
b) des nanoparticules, que l'on peut obtenir par broyage de matières solides élastomères et thermoplastiques sous la forme de morceaux, également en liaison avec d'autres matériaux, dans lequel les morceaux sont soumis à une extraction avec du dioxyde de carbone surcritique et les morceaux ainsi traités sont ensuite soumis à un traitement par ondes de choc avec des ondes de choc déclenchées sous haute tension dans des milieux diélectriques fluides, dans lequel le milieu est de l'eau, un liquide organique avec Fp au-dessous de -20° C ou du dioxyde de carbone surcritique, et
c) en option, d'autres agents additifs et auxiliaires, en particulier des additifs, d'autres agents de charge et/ou fibres de renforcement.

2. Utilisation du mélange selon la revendication 1 pour faire des composites à partir de matières thermoplastiques.

3. Utilisation du mélange selon la revendication 1 à titre de réactif de polymérisation ou de polycondensation, dans laquelle on peut avoir exécuté, dans une étape qui précède l'utilisation, en option une conversion chimique de la matière de base à l'intérieur du mélange.

4. Utilisation selon la revendication 2 ou 3 à l'intérieur d'une procédure de moulage par extrusion ou de moulage par injection.

5. Utilisation selon la revendication 3 ou 4 dans une procédure de moulage par injection-réaction (Reaction Injection Moulding, RIM).
